# EUROPEAN PATENT APPLICATION

(11) **EP 3 309 877 A1**
(43) Date of publication of application: **18.04.2018**
(21) Application number: 16811176.3
(22) Date of filing: 06.05.2016
(51) Int. Cl.: H01M 4/48, H01M 4/36, H01M 4/587

(54) **NEGATIVE ELECTRODE ACTIVE SUBSTANCE FOR NON-AQUEOUS ELECTROLYTE SECONDARY BATTERY, NEGATIVE ELECTRODE FOR NON-AQUEOUS ELECTROLYTE SECONDARY BATTERY, NON-AQUEOUS ELECTROLYTE SECONDARY BATTERY, AND METHOD FOR PRODUCING NEGATIVE ELECTRODE MATERIAL FOR NON-AQUEOUS ELECTROLYTE SECONDARY BATTERY**

(30) Priority: 15.06.2015 JP 2015120371
(71) Applicant: Shin-Etsu Chemical Co., Ltd., Tokyo 100-0004 (JP)
(72) Inventor: TAKAHASHI, Kohta, Annaka-shi Gunma 379-0224 (JP); KAMO, Hiromichi, Annaka-shi Gunma 379-0224 (JP); HIROSE, Takakazu, Annaka-shi Gunma 379-0224 (JP); FURUYA, Masahiro, Annaka-shi Gunma 379-0224 (JP); YOSHIKAWA, Hiroki, Annaka-shi Gunma 379-0224 (JP)
(74) Representative: Wibbelmann, Jobst
(86) International application number: PCT/JP2016/002248
(87) International publication number: WO 2016/203695

(57) **Abstract**

The present invention is a negative electrode active material for a non-aqueous electrolyte secondary battery, including: negative electrode active material particles that contain a silicon compound (SiOₓ: 0.5 ≤ x ≤ 1.6) having a carbon coating on a surface, wherein the carbon coating exhibits a G'-band peak at a Raman shift in a range of 2600 cm⁻¹ to 2760 cm⁻¹ and a G-band peak at a Raman shift in a range of 1500 cm⁻¹ to 1660 cm⁻¹ in a Raman spectrum obtained by Raman spectrometry, and the G'-band peak and the G-band peak satisfy 0 < I_{G'}/I_{G} ≤ 0.6 where I_{G'} and I_{G} are intensities of the G'-band peak and the G-band peak, respectively. This provides a negative electrode active material having a high capacity retention rate and high initial efficiency.

## Description

### TECHNICAL FIELD

The present invention relates to a negative electrode active material for a non-aqueous electrolyte secondary battery. The present invention also relates to a negative electrode and a non-aqueous electrolyte secondary battery containing this negative electrode active material. The present invention further relates to a method of producing a negative electrode material for a non-aqueous electrolyte secondary battery.

### BACKGROUND ART

As mobile devices such as mobile electronic devices and mobile communication devices have highly developed, secondary batteries with higher energy density are needed to improve efficiency and reduce the size and weight of the devices. The capacity of the secondary batteries of this type can be improved by known methods: use of a negative electrode material made of an oxide of V, Si, B, Zr or Sn, or a complex oxide thereof (See Patent Documents 1 and 2); use of a negative electrode material made of a metal oxide subjected to melting and rapid cooling (See Patent Document 3); use of a negative electrode material made of a silicon oxide (See Patent Document 4); use of a negative electrode material made of Si₂N₂O and Ge₂N₂O (See Patent Document 5), and others.

The negative electrode materials can be made electric conductive by known methods: performing mechanical alloying of SiO and graphite, and carbonizing the resultant (See Patent Document 6); coating silicon particles with carbon layers by chemical vapor deposition (See Patent Document 7); coating silicon oxide particles with carbon layers by chemical vapor deposition (See Patent Document 8).

Although these conventional methods increase the charge and discharge capacity and energy density to some extent, the increase is insufficient for market needs and the cycle performance fails to fulfill the needs. The conventional methods need to further improve the energy density and thus are not entirely satisfactory. In particular, Patent Document 4 discloses use of a silicon oxide as a negative electrode material for a lithium-ion secondary battery so as to obtain an electrode with a high capacity. To the present inventor's knowledge, however, this method cannot achieve low irreversible capacity at first charging and discharging and a practical level of cycle performance, so this method can be improved on.

The methods to provide a negative electrode material with electric conductivity remain the following problems. The method in Patent Document 6 uses solid-state welding and thus cannot uniformly form a carbon coating, resulting in insufficient conductivity. Although the method in Patent Document 7 enables the formation of a uniform carbon coating, this method uses Si as a negative electrode material and thus reduces the cycle performance because the expansion and contraction of the material becomes too large at lithium insertion or extraction. This makes the material unsuited to practical use. The charge capacity consequently needs to be limited to avoid this problem. Although the method in Patent Document 8 enables the improvement in cycle performance, the precipitation of silicon fine crystals, the structure of a carbon coating and the fusion of the carbon coating and the base are unsatisfactory. Thus, the material produced by this method is unpractical for use in secondary batteries. This material causes the batteries to gradually reduce the capacity with an increase in charging and discharging cycles and to greatly reduce the capacity after given cycles.

### CITATION LIST

### PATENT LITERATURE

Patent Document 1: Japanese Unexamined Patent publication (Kokai) No. H05-174818
Patent Document 2: Japanese Unexamined Patent publication (Kokai) No. H06-60867
Patent Document 3: Japanese Unexamined Patent publication (Kokai) No. H10-294112
Patent Document 4: Japanese Patent No. 2997741
Patent Document 5: Japanese Unexamined Patent publication (Kokai) No. H11-102705
Patent Document 6: Japanese Unexamined Patent publication (Kokai) No. 2000-243396
Patent Document 7: Japanese Unexamined Patent publication (Kokai) No. 2000-215887
Patent Document 8: Japanese Unexamined Patent publication (Kokai) No. 2002-42806

### SUMMARY OF INVENTION

### TECHNICAL PROBLEM

The present invention was accomplished in view of the above-described problems. It is an object of the present invention to provide a negative electrode active material that has a high capacity retention rate and first efficiency. It is also an object to provide a method of producing a negative electrode material that has a high capacity retention rate and high first efficiency.

### SOLUTION TO PROBLEM

To achieve the foregoing object, the present invention provides a negative electrode active material for a non-aqueous electrolyte secondary battery, including:
negative electrode active material particles that contain a silicon compound (SiOₓ: 0.5 ≤ x ≤ 1.6) having a carbon coating on a surface,
wherein the carbon coating exhibits a G'-band peak at a Raman shift in a range of 2600 cm⁻¹ to 2760 cm⁻¹ and a G-band peak at a Raman shift in a range of 1500 cm⁻¹ to 1660 cm⁻¹ in a Raman spectrum obtained by Raman spectrometry, and
the G'-band peak and the G-band peak satisfy 0 < I_{G'}/I_{G} ≤ 0.6 where I_{G'} and I_{G} are intensities of the G'-band peak and the G-band peak, respectively.

The carbon coating contains an overlapping structure of graphene layers, which has particularly favorable electric conductivity, when the G'-band peak is detected by Raman spectrometry. When the peak intensity ratio I_{G'}/I_{G} is larger than 0, the carbon coating contains an overlapping structure of graphene layers, which makes the carbon coating having this structure excellent in electric conductivity, thereby allowing the negative electrode active material to have high initial efficiency and a high capacity retention rate. When I_{G'}/I_{G} ≤ 0.6, it is possible to prevent a side reaction of lithium, which is occluded to a negative electrode active material in charging and discharging, on the carbon coating to prevent lowering of the initial efficiency.

It is preferred that the carbon coating exhibit a fragment of a C_{y}H_{z}-based compound in time of flight secondary ion mass spectroscopy (TOF-SIMS).

When the inventive negative electrode active material has a surface state in which the fragment of a C_{y}H_{z}-based compound is detected on the carbon coating by TOF-SIMS, the negative electrode active material becomes well compatible with a binder, and as a result, the battery performances can be further improved.

It is preferred that the carbon coating exhibit a peak attributable to C₃H₅ and a peak attributable to C₄H₉ in the time of flight secondary ion mass spectroscopy spectrum and satisfy a relationship of 0.5 ≤ B/A ≤ 1.2 where A and B are intensities of the peak attributable to C₃H₅ and the peak attributable to C₄H₉, respectively.

The battery performances particularly correlate with an amount of the C₄H₉ component among the C_{y}H_{z}-based compounds detected on the carbon coating layer. When the intensity B of the peak attributable to C₄H₉ to the intensity A of the peak attributable to C₃H₅, that is, B/A is 0.5 or more, the capacity retention rate can be further improved. When the B/A is 1.2 or less, it is possible to prevent lowering of the initial efficiency and the capacity retention rate to give excellent battery performances.

It is preferred that the carbon coating further exhibit a D-band peak at a Raman shift in a range of 1300 cm⁻¹ to 1460 cm⁻¹ in the Raman spectrum obtained by Raman spectrometry and satisfies 0.5 < I_{D}/I_{G} ≤ 1.5 where I_{D} and I_{G} are intensities of the D-band peak and the G-band peak, respectively.

When the range of the intensity ratio I_{D}/I_{G} of the D-band peak and the G-band peak is 0.5 or more, the ratio of sp2 carbon is not excessively high in the carbon coating, and the irreversible capacity can be smaller. When the range of I_{D}/I_{G} is 1.5 or less, the ratio of sp3 carbon is not excessively high, and the electric conductivity and the battery performances can be favorable.

It is preferred that the mass ratio of the carbon coating be 0.5% by mass or more and 15% by mass or less with respect to the total mass of the silicon compound and the carbon coating.

When the amount of the carbon coating layer is 0.5% by mass or more, the electric conductivity can be improved sufficiently. The amount of 15% by mass or less can secure sufficient battery capacity.

It is preferred that the silicon compound exhibit a diffraction peak having a half width (2θ) of 1.2° or more, the diffraction peak being attributable to a Si(111) crystal face and obtained by X-ray diffraction, and a crystallite size attributable to the crystal face be 7.5 nm or less.

The silicon compound is favorable as the Si component has lower crystallinity. It is desirable that the half width (2θ) of the diffraction peak obtained by X-ray diffraction and the crystallite size, the both of which are attributable to the Si(111) crystal face, are in the foregoing ranges. The lower crystallinity of the Si component can improve the battery performances. The Si component of the silicon compound is preferably amorphous.

It is preferred that the negative electrode active material particles have volume resistivity of 0.10 Ω·cm or more and 100 Ω·cm or less when the negative electrode active material particles are compressed to 1.5 g/cm³.

When the volume resistivity under compression to 1.5 g/cm³ is 100 Ω·cm or less, the electric conductivity becomes favorable to improve the battery performances. When the volume resistivity is 0.10 Ω·cm or more, it is possible to securely prevent occurring of short circuit to improve the safety of a battery.

To achieve the foregoing objects, the present invention also provides a negative electrode for a non-aqueous electrolyte secondary battery including any of the foregoing negative electrode active materials for a non-aqueous electrolyte secondary battery.

The above negative electrode can be a negative electrode that exhibits a high capacity retention rate and high first efficiency when used for a non-aqueous electrolyte secondary battery.

It is preferred that the negative electrode further comprise a carbon-based active material, and the silicon compound and the carbon-based active material satisfy a relationship of X/Y ≥ 1 where Y and X are median diameters of the silicon compound and the carbon-based active material, respectively.

When the negative electrode contains a carbon-based negative electrode material together with the negative electrode material composed of the silicon compound and the coating layer as described above, it is possible to prevent breakage of the negative electrode due to its volume change. This effect is exhibited particularly effectively when the carbon-based negative electrode material is equivalent to or larger than the silicon compound.

To achieve the foregoing objects, the present invention also provides a non-aqueous electrolyte secondary battery including any of the foregoing negative electrodes for a non-aqueous electrolyte secondary battery.

The non-aqueous electrolyte secondary battery using the inventive negative electrode exhibits a high capacity retention rate and high first efficiency.

To achieve the foregoing objects, the present invention further provides a method of producing a negative electrode material for a non-aqueous electrolyte secondary battery containing negative electrode active material particles, including the steps of:
producing silicon oxide particles shown by the general formula of SiOx (0.5 ≤ x ≤ 1.6);
coating each surface of the silicon oxide particles with a carbon coating; and
choosing selected silicon oxide particles coated with the carbon coating from among the silicon oxide particles coated with the carbon coating such that the carbon coating of the selected silicon oxide particles exhibits a G'-band peak at a Raman shift in a range of 2600 cm⁻¹ to 2760 cm⁻¹ and a G-band peak at a Raman shift in a range of 1500 cm⁻¹ to 1660 cm⁻¹ in a Raman spectrum obtained by Raman spectrometry and satisfies 0 < I_{G'}/I_{G} ≤ 0.6 where I_{G'} and I_{G} are intensities of the G'-band peak and the G-band peak, respectively;
wherein the negative electrode material for a non-aqueous electrolyte secondary battery is produced by using the selected silicon oxide particles coated with the carbon coating as the negative electrode active material particles.

Such a production method, in which the selected silicon oxide particles are used as negative electrode active material particles as described above, can securely produce a negative electrode material for a non-aqueous electrolyte secondary battery that exhibits high capacity and excellent cycle performance.

### ADVANTAGEOUS EFFECTS OF INVENTION

The inventive negative electrode active material can be used as a negative electrode active material for a non-aqueous electrolyte secondary battery to give high capacity, good cycle performance, as well as initial charging and discharging performance. The same performances can be obtained in a secondary battery that contains the inventive negative electrode active material for a non-aqueous electrolyte secondary battery. The same effects can be obtained in an electronic apparatus, a machine tool, an electric vehicle, and a power storage system using the inventive secondary battery.

The method of producing a negative electrode active material and the method of producing a negative electrode material of the present invention can produce a negative electrode active material and a negative electrode material with high capacity that have good cycle performance and initial charging and discharging performance.

### BRIEF DESCRIPTION OF DRAWINGS

FIG. 1 is a schematic cross-sectional diagram showing an example of configuration of a negative electrode using a negative electrode active material for a non-aqueous electrolyte secondary battery according to the present invention;
FIG. 2 is an exploded diagram showing an example of configuration of a non-aqueous electrolyte secondary battery (a laminate film lithium-ion secondary battery) according to the present invention;
FIG. 3 is a Raman spectrum of a carbon coating on the surface of a silicon-based active material in Example 1-1.

### DESCRIPTION OF EMBODIMENTS

Hereinafter, embodiments of the present invention will be described, but the present invention is not limited thereto. Incidentally, the embodiments will be described in the following order.
1. Negative Electrode for Non-Aqueous Electrolyte Secondary Battery
2. Non-Aqueous Electrolyte Secondary Battery (a laminate film lithium-ion secondary battery)

### <1. Negative Electrode for Non-Aqueous Electrolyte Secondary Battery>

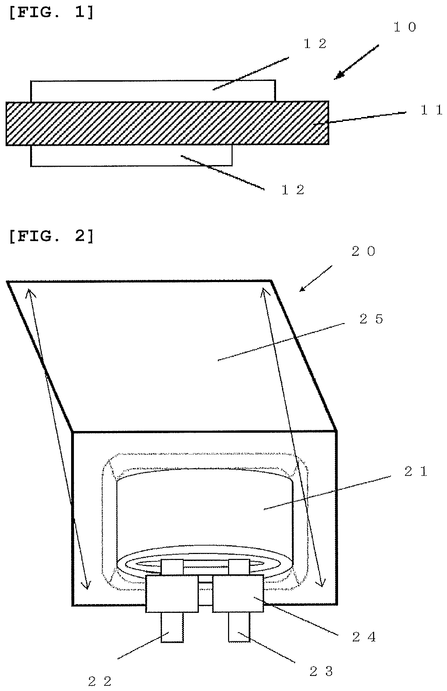

A negative electrode for a non-aqueous electrolyte secondary battery using the inventive negative electrode active material for a non-aqueous electrolyte secondary battery will be now described. FIG. 1 shows the cross-sectional configuration of a negative electrode for a non-aqueous electrolyte secondary battery (simply referred to as "a negative electrode" below) according to an embodiment of the present invention.

### [Configuration of Negative Electrode]

As shown in FIG. 1, the negative electrode 10 has a negative electrode active material layer 12 on a negative electrode current collector 11. The negative electrode active material layer 12 may be disposed on one side or both sides of the negative electrode current collector 11. The negative electrode current collector 11 is not necessarily needed in a negative electrode using the inventive negative electrode active material.

### [Negative Electrode Current Collector]

The negative electrode current collector 11 is made of a highly electric conductive and mechanically strong material. Examples of the electric conductive material used for the negative electrode current collector 11 include copper (Cu) and nickel (Ni). Such electric conductive materials preferably have inability to form an intermetallic compound with lithium (Li).

The negative electrode current collector 11 preferably contains carbon (C) and sulfur (S) besides the main element because these elements improve the physical strength of the negative electrode current collector. In particular, when the active material layer is expandable at charging, the current collector containing the above elements can inhibit deformation of the electrodes and the current collector itself. The amount of the contained elements is preferably, but not particularly limited to, 100 ppm or less. This amount enables effective inhibition of the deformation.

The surface of the negative electrode current collector 11 may or may not be roughed. Examples of the negative electrode current collector roughened include a metallic foil subjected to an electrolyzing process, an embossing process, or a chemical etching process. Examples of the negative electrode current collector that is not roughened include a rolled metallic foil.

### [Negative Electrode Active Material Layer]

The negative electrode active material layer 12 contains a negative electrode active material that can occlude and emit lithium ions and may further contain other materials such as a negative electrode binder or a conductive additive depending on battery design. The inventive negative electrode active material for a non-aqueous electrolyte secondary battery can be used for the negative electrode active material layer 12.

The negative electrode active material particle contained in the inventive negative electrode active material is composed of a silicon compound shown by SiOₓ (0.5 ≤ x ≤ 1.6) that can occlude and emit lithium ions and a carbon coating that contains a carbon component coating the surface of the silicon compound. In this case, the lithium ion can be occluded and emitted on at least part of the carbon coating composed of a carbon component. Hereinafter, the negative electrode active material particles composed of a silicon compound in the present invention is also referred to as "silicon-based active material particles".

As described above, the silicon-based active material particles used in the inventive negative electrode active material contain a silicon oxide material (SiOₓ: 0.5 ≤ x ≤ 1.6), in which composition the x is preferably close to 1. The reason is that this composition enables high cycle performance. The present invention does not necessarily intend a silicon material composition with a purity of 100% but permits a silicon material containing a minute amount of impurities.

In the inventive negative electrode active material, the carbon coating of the silicon-based active material particle exhibits a G'-band peak at a Raman shift in a range of 2600 cm⁻¹ to 2760 cm⁻¹ and a G-band peak at a Raman shift in a range of 1500 cm⁻¹ to 1660 cm⁻¹ in a Raman spectrum obtained by Raman spectrometry, and the G'-band peak and the G-band peak satisfy 0 < I_{G'}/I_{G} ≤ 0.6 where I_{G'} and I_{G} are intensities of the G'-band peak and the G-band peak, respectively.

As described above, the silicon-based active material particle is characterized in that the carbon coating layer on the surface has a structure to give a G'-band peak by Raman spectrometry. The carbon structure that gives a G'-band peak can be obtained by a thermal CVD reaction described later, in which the structure of carbon coating layer can be controlled by controlling the CVD conditions such as a type of gas, the temperature, the pressure, and the gas residence time. The control of the CVD conditions enables changing of the peak intensity ratio I_{G'}/I_{G} to a desirable value.

When the carbon coating of the silicon-based active material particle has a structure to give a G'-band peak as described above, the electric conductivity becomes favorable, and the battery performances can be improved remarkably. Without a G'-band peak, the carbon coating increases the resistivity, which causes lowering of initial efficiency of a battery. Moreover, the intensity ratio I_{G'}/I_{G} more than 0.6 causes to lower the initial efficiency due to occlusion of Li on the carbon coating layer.

The carbon coating is preferably a one that exhibits a fragment of a C_{y}H_{z}-based compound in time of flight secondary ion mass spectroscopy (TOF-SIMS). In surface conditions with the carbon coating layer exhibiting the fragment of a C_{y}H_{z}-based compound, the compatibility with a binder becomes favorable, thereby resulting in better battery performances.

The carbon coating is preferably a one that exhibits a peak attributable to C₃H₅ and a peak attributable to C₄H₉ in a spectrum obtained by time of flight secondary ion mass spectroscopy spectrum and satisfies a relationship of 0.5 ≤ B/A ≤ 1.2 where A and B are intensities of the peak attributable to C₃H₅ and the peak attributable to C₄H₉, respectively. The battery performances particularly correlate with an amount of the C₄H₉ component among C_{y}H_{z}-based compounds detected on the carbon coating layer. When the B/A is 0.5 or more, the capacity retention rate can be further improved. When the B/A is 1.2 or less, it is possible to prevent lowering of the initial efficiency and the capacity retention rate to give excellent battery performances. This is probably due to prevention of a side reaction on the surface of carbon coating.

The carbon coating is preferably a one that further exhibits a D-band peak at a Raman shift in a range of 1300 cm⁻¹ to 1460 cm⁻¹ in the Raman spectrum obtained by Raman spectrometry and satisfies 0.5 < I_{D}/I_{G} ≤ 1.5 where I_{D} and I_{G} are intensities of the D-band peak and the G-band peak, respectively. When the range of the intensity ratio I_{D}/I_{G} of the D-band peak and the G-band peak is larger than 0.5, the ratio of sp2 carbon is not excessively high in the carbon coating, and the irreversible capacity can be smaller thereby. When the range of I_{D}/I_{G} is 1.5 or less, the ratio of sp3 carbon is not excessively high, and the electronic conductivity and the battery performances can be favorable thereby.

As described above, the silicon-based active material particle is coated with the carbon coating layer composed of a carbon component. The amount of the carbon coating layer is preferably 0.5% by mass or more and 15% by mass or less with respect to the total of the silicon compound and the carbon coating layer. When the amount of the carbon coating layer is 0.1% by mass or more, sufficient effect can be obtained for improving the electric conductivity. When the amount is 15% by mass or less, the amount of the carbon coating is not excessively large, and the battery capacity can be secured sufficiently. The coating method with this carbon component is preferably, but not particularly limited to, sugar carbonization or pyrolysis of hydrocarbon gas. These methods can improve the coverage.

In the present invention, the silicon compound is favorable as the Si component has lower crystallinity. It is desirable that the diffraction peak has a half width (2θ) of 1.2° or more, the diffraction peak being attributable to a Si(111) crystal face and obtained by X-ray diffraction, and the crystallite size attributable to the crystal face is 7.5 nm or less. This is because decrease in the Si crystal makes it possible to prevent the battery performances from worsening due to the presence of Si crystal.

The silicon-based active material particles preferably have volume resistivity of 0.10 Ω·cm or more and 100 Ω·cm or less when the particles are compressed to 1.5 g/cm³. When the volume resistivity under compression to 1.5 g/cm³ is 100 Ω·cm or less, the electric conductivity becomes favorable, and the battery performances are improved. When the volume resistivity is 0.01 Ω·cm or more, occurring of short circuit can be prevented securely, and the safety of a battery can be improved. The resistivity of the negative electrode active material under compression can be measured under the following conditions, for example.
- Apparatus: powder resistivity measurement system manufactured by Mitsubishi Chemical Analytech Co., Ltd. MCP-PD type
- Four-point probe method
- Tested amount: 1.5 g
- Compression and measurement: powder resistivity is measured every 5 N while compressing up to 20 N to give measured values, from which a resistivity under compression of 1.5 g/cm³ is calculated.

The silicon-based active material particles are preferably surrounded with a particulate carbon-based compound having a median size smaller than that of the silicon-based active material particles. This allows improvement in electrical conductivity between the silicon-based active material particles. The carbon-based compound can be around the silicon-based active material particles by, for example, physically mixing with the silicon-based active material particles.

The median size of the silicon compound preferably ranges from 0.5 µm to 20 µm, but not particularly limited thereto. This range makes it easy to occlude and emit lithium ions and inhibits the breakage of the particles at charging and discharging. A median size of 0.5 µm or more then prevents the surface area from excessively increasing and can thus prevent an increase in battery irreversible capacity; a median size of 20 µm or less inhibits the breakage of the particles and the creation of a new surface.

The negative electrode binder may be, for example, one or more of a polymer material and a synthetic rubber. Examples of the polymer material include polyvinylidene fluoride, polyimide, polyamideimide, aramid, polyacrylic acid, lithium polyacrylate, and carboxymethyl cellulose. Examples of the synthetic rubber include styrene-butadiene rubber, a fluorinated rubber, and an ethylene-propylenediene.

Examples of the negative electrode conductive additive include carbon materials such as carbon black, acetylene black, graphite, ketjen black, carbon nanotube, carbon nanofiber, and a combination thereof.

The negative electrode active material layer may be produced by using a negative electrode active material in which the silicon-based active material and the carbon-based active material are mixed. The mixing of the silicon-based active material and the carbon-based active material allows the negative electrode active material layer to reduce its electrical resistance and a stress due to its expansion at charging. Examples of the carbon-based active material include pyrolytic carbons, cokes, glassy carbon fiber, a baked organic polymeric compound, and carbon black.

The silicon compound and the carbon-based active material preferably satisfy a relationship of X/Y ≥ 1 where Y and X are median diameters of the silicon compound and the carbon-based active material, respectively. When the negative electrode contains a carbon-based negative electrode active material together with the negative electrode active material containing a silicon-based active material particles as described above, it is possible to prevent breakage of the negative electrode due to its volume change. This effect is exhibited particularly effectively when the carbon-based active material is equivalent to or larger than the silicon-based active material.

The negative electrode active material layer is formed by, for example, an application method. The application method is to mix the negative electrode active material particles and the binders, in addition to the conductive additive and the carbon material as needed, and disperse the resultant mixture into an organic solvent or water to apply the resultant to a subject.

### [Method of Producing Negative Electrode]

Hereinafter, the method of producing the negative electrode will be described.

The method of producing the inventive negative electrode material for a non-aqueous electrolyte secondary battery is first described. In the beginning silicon oxide particles shown by the general formula of SiOₓ (0.5 ≤ x ≤ 1.6) are produced. Specifically, a raw material capable of generating a silicon oxide gas (also referred to as a raw material to be vaporized) is heated under an inert gas atmosphere or a reduced pressure at a temperature ranging from 900°C to 1600°C to produce the silicon oxide gas. The raw material can be a mixture of metallic silicon powder and silicon dioxide powder. The mole ratio of the mixture is preferably in a range of 0.8 < metallic silicon powder/silicon dioxide powder < 1.3, in consideration of the existence of oxygen on the metallic silicon powder surface and a minute amount of oxygen in a reactor. The produced silicon oxide gas is deposited on an adsorption plate. The temperature in the reactor is decreased to 100°C or less and then a deposit is taken out. The deposit is then pulverized with a ball mill or a jet mill to form powder. The Si crystallite in the silicon oxide particles can be controlled by changing the degree of preparation and the temperature to vaporize the raw material to be vaporized, as well as heat treatment of the formed silicon oxide. In the foregoing manner, the silicon oxide particles can be produced.

Then, the surfaces of the obtained silicon oxide particles are coated with the carbon coating. Thermal CVD is desirable as a method to form the carbon coating on the surface of the obtained silicon oxide particles, although it is not particularly limited thereto. The thermal CVD is to fill a furnace in which the silicon oxide powder is placed with a hydrocarbon gas and heat the interior of the furnace. The hydrocarbon gas is pyrolyzed to form the carbon coating on the surfaces of the silicon oxide particles. The temperature in the furnace is preferably 1200°C or less, more preferably 950°C or less, although it is not particularly limited thereto. This range enables inhibition of unintended disproportionation of the silicon oxide particles. The hydrocarbon gas preferably has a composition of CₙHₘ where 3 ≥ n, but is not particularly limited thereto, for this composition enables reduction in production cost and improvement in physical properties of a pyrolysis product.

Subsequently, the silicon oxide particles coated with the carbon coating are subjected to selection to choose ones in which the carbon coating exhibits a G'-band peak at a Raman shift in a range of 2600 cm⁻¹ to 2760 cm⁻¹ and a G-band peak at a Raman shift in a range of 1500 cm⁻¹ to 1660 cm⁻¹ in a Raman spectrum obtained by Raman spectrometry and satisfies 0 < I_{G'}/I_{G} ≤ 0.6 where I_{G'} and I_{G} are intensities of the G'-band peak and the G-band peak, respectively.

Then, the selected silicon oxide particles coated with the carbon coating are used as the negative electrode active material particles to produce the negative electrode material for a non-aqueous electrolyte secondary battery. Specifically, the negative electrode material for a non-aqueous electrolyte secondary battery is formed by mixing the foregoing silicon-based active material particles coated with the carbon coating, the negative electrode binders, and other materials such as the conductive additive.

It is to be noted that the selection of the silicon oxide particles coated with the carbon coating is not necessarily carried out in every production of the negative electrode material. When the production conditions to realize 0 < I_{G'}/I_{G} ≤ 0.6 is once found and selected by measuring a Raman spectrum, the subsequent negative electrode material can be produced in the same conditions as the selected conditions.

Subsequently, the negative electrode is produced by using the foregoing negative electrode material. Specifically, the negative electrode material is mixed with organic solvent or water to form negative electrode mixture slurry. The negative electrode mixture slurry is then applied to the surface of a negative electrode current collector and dried to form a negative electrode active material layer 12 shown in FIG. 1. If necessary, heating press may be performed. When the negative electrode current collector contains 100 ppm or less of carbon and sulfur, more improved effect can be obtained. In the foregoing manner, the inventive negative electrode can be produced.

### <2. Lithium-Ion Secondary Battery>

Then, the inventive non-aqueous electrolyte secondary battery will be described. Incidentally, the following exemplifies a laminate film lithium-ion secondary battery.

### [Configuration of Lithium-Ion Secondary Battery]

The laminate film lithium-ion secondary battery 20 shown in FIG. 2 includes a wound electrode body 21 interposed between sheet-shaped outer parts 25. The wound body are formed by winding a positive electrode, a negative electrode, and a separator disposed between these electrodes. The electrode body may also be composed of a laminated part of the positive and negative electrodes, and a separator disposed between these electrodes. The electrode bodies of both types have a positive-electrode lead 22 attached to the positive electrode and a negative-electrode lead 23 attached to the negative electrode. The outermost circumference of the electrode bodies is protected by a protecting tape.

The positive-electrode lead and the negative-electrode lead, for example, extends from the interior of the outer parts 25 toward the exterior in one direction. The positive-electrode lead 22 is made of, for example, an electric conductive material such as aluminum; the negative-electrode lead 23 is made of, for example, an electric conductive material such as nickel or copper.

An example of the outer part 25 is a laminate film composed of a fusion-bond layer, a metallic layer, and a surface protecting layer stacked in this order. Two laminate films are fusion-bonded or stuck with an adhesive at the outer edge of their fusion-bond layers such that each fusion-bond layer faces the electrode body 21. The fusion-bond layer may be, for example, a film such as a polyethylene or polypropylene film; the metallic layer may be aluminum foil, for example; the protecting layer may be nylon, for example.

The space between the outer parts 25 and the positive and negative electrode leads is filled with close adhesion films 24 to prevent air from entering therein. Exemplary materials of the close adhesion films include polyethylene, polypropylene, and polyolefin resins.

### [Positive Electrode]

The positive electrode has a positive electrode active material layer disposed on one side or both sides of a positive electrode current collector as in the negative electrode 10 shown in FIG. 1, for example.

The positive electrode current collector is made of, for example, an electric conductive material such as aluminum.

The positive electrode active material layer contains any one kind or two or more kinds of positive electrode materials that can occlude and emit lithium ions, and may contain a binder, a conductive additive, a dispersing agent, or other materials according to design. The same detailed description as described for the negative electrode binders and negative electrode conductive additive, for example, is then given for this binder and this conductive additive.

The positive electrode material is preferably a compound containing lithium. Examples of the lithium-containing compound include a complex oxide composed of lithium and a transition metal element, and a phosphate compound containing lithium and a transition metal element. Among the described positive electrode materials, a compound containing at least one of nickel, iron, manganese, and cobalt is preferable. The chemical formula of this compound is expressed by, for example, LiₓM₁O₂ or Li_{y}M₂PO₄, where M₁ and M₂ represent at least one kind of transition metal elements, and x and y represent a value varied depending on a charging or discharging status of a battery, which typically satisfy 0.05 ≤ x ≤ 1.10 and 0.05 ≤ y ≤ 1.10.

Examples of the complex oxide composed of lithium and a transition metal element include a lithium cobalt complex oxide (LiₓCoO₂), a lithium nickel complex oxide (LiₓNiO₂). Examples of the phosphate compound containing lithium and a transition metal element include a lithium iron phosphate compound (LiFePO₄), a lithium iron manganese phosphate compound (LiFe₁₋ᵤMnᵤPO₄ (0 < u < 1)). Use of these positive electrode materials enables a higher battery capacity and excellent cycle performance.

### [Negative Electrode]

The negative electrode is configured as in the above negative electrode 10 for a lithium-ion secondary battery shown in FIG. 1, and, for example, has the negative electrode active material layer 12 disposed on both faces of the current collector 11. The negative electrode preferably has a negative-electrode charge capacity larger than an electrical capacitance (battery charge capacity) provided by the positive electrode active material, for this negative electrode itself can inhibit the precipitation of lithium metal.

The positive electrode active material layer is formed partially on both faces of the positive electrode current collector. The same is true of the negative electrode active material layer. Such a negative electrode may have, for example, an area at which the positive electrode active material layer is not present on the surface of the positive electrode current collector that the negative electrode active material layer faces. This area permits stable battery design.

The above area at which the positive and negative electrode active material layers do not face one another, a non-facing area, is hardly affected by charging and discharging. The status of the negative electrode active material layer is consequently retained since its formation. This enables repeatable investigation of the composition of negative electrode active material with high precision without being affected by charging and discharging.

### [Separator]

The separator separates the positive electrode and the negative electrode, prevents short circuit current due to contact of these electrodes, and passes lithium ions therethrough. This separator may be made of, for example, a porous film of synthetic resin or ceramics, or two or more stacked porous films. Examples of the synthetic resin include polytetrafluoroethylene, polypropylene, and polyethylene.

### [Electrolyte]

A part of the active material layers or the separator is impregnated with a liquid electrolyte (an electrolyte solution). The electrolyte is composed of electrolyte salt dissolved in a solvent and may contain other materials such as additives.

The solvent may be, for example, a non-aqueous solvent. Examples of the non-aqueous solvent include ethylene carbonate, propylene carbonate, butylene carbonate, dimethyl carbonate, diethyl carbonate, ethylmethyl carbonate, methylpropyl carbonate, 1,2-dimethoxyethane, and tetrahydrofuran. Among these, ethylene carbonate, propylene carbonate, dimethyl carbonate, diethyl carbonate, or ethylmethyl carbonate, or the combination thereof is preferable. Such solvent enables better performances. The combination of a viscous solvent, such as ethylene carbonate or propylene carbonate, and a non-viscous solvent, such as dimethyl carbonate, ethylmethyl carbonate, or diethyl carbonate allows much better performances, for such a solvent improves the dissociation of electrolyte salt and ionic mobility.

The solvent preferably contains an unsaturated carbon bond cyclic carbonate as an additive, for this enables the formation of a stable coating on a negative electrode at charging and discharging and the inhibition of a decomposition reaction of the electrolyte. Examples of the unsaturated carbon bond cyclic carbonate include vinylene carbonate and vinyl ethylene carbonate.

In addition, the solvent preferably contains sultone (cyclic sulfonic acid ester) as an additive, for this enables improvement in chemical stability of a battery. Examples of the sultone include propane sultone and propene sultone.

In addition, the solvent preferably contains acid anhydride, for this enables improvement in chemical stability of the electrolyte. The acid anhydride may be, for example, propane disulfonic acid anhydride.

The electrolyte salt may contain, for example, at least one light metal salt such as lithium salt. Examples of the lithium salt include lithium hexafluorophosphate (LiPF₆), and lithium tetrafluoroborate (LiBF₄).

The content of the electrolyte salt in the solvent preferably ranges from 0.5 mol/kg or more and 2.5 mol/kg or less. This content enables high ionic conductivity.

### [Manufacture of Laminate Film Secondary Battery]

Firstly, a positive electrode is produced with the above positive electrode material as follows. A positive electrode mixture is created by mixing the positive electrode material with as necessary the binder, the conductive additive, and other materials, and dispersed in an organic solvent to form slurry of the positive-electrode mixture. This slurry is then applied to a positive electrode current collector with a coating apparatus such as a die coater having a knife roll or a die head, and dried by hot air to obtain a positive electrode active material layer. The positive electrode active material layer is finally compressed with, for example, a roll press. At this stage, heating may be performed, and compression may be repeated multiple times.

Secondly, a negative electrode active material layer is formed on a negative electrode current collector to produce a negative electrode through the same procedure as in the above production of the negative electrode 10 for a lithium-ion secondary battery.

In producing the positive electrode and the negative electrode, the active material layers are each formed on both faces of the positive and negative electrode current collector. In both the electrodes, the length of these active material layers formed on the faces may differ from one another (See FIG. 1).

Then, an electrolyte is prepared. With ultrasonic welding, the positive electrode lead 22 is attached to the positive electrode current collector and the negative-electrode lead 23 is attached to the negative electrode current collector. The positive and negative electrodes and the separator interposed therebetween are stacked or wound to produce the wound electrode body 21 and a protecting tape is stuck to the outermost circumference of the body. The electrode body is flattened. The film-shaped outer part 25 is folded in half to interpose the electrode body therebetween. The insulating portions of the outer part are stuck to one another by heat sealing such that one of the four sides is opened to house the wound electrode body. The close adhesion films are inserted between the outer part and the positive and negative electrode leads. The prepared electrolyte is introduced from the open side in a prescribed amount to perform the impregnation of the electrolyte under a vacuum. The open side is stuck by vacuum heat sealing.

In this manner, the laminate film secondary battery 20 can be produced.

### EXAMPLE

The present invention will be more specifically described below with reference to Examples of the present invention and Comparative Examples, but the present invention is not limited to these Examples.

### (Example 1-1)

Such a laminate film lithium-ion secondary battery as shown in FIG. 2 was produced by the following procedure.

The procedure began with the production of a positive electrode. Positive electrode active materials of 95 mass parts of lithium cobalt oxide (LiCoO₂), 2.5 mass parts of a positive electrode conductive additive (acetylene black), and 2.5 mass parts of a positive electrode binder (polyvinylidene fluoride, PVDF) were mixed to produce a positive-electrode mixture. The positive-electrode mixture was dispersed in an organic solvent (N-methyl-2-pyrrolidone, NMP) to form paste slurry. The slurry was applied to both surfaces of a positive electrode current collector with a coating apparatus having a die head and dried with a drying apparatus of hot-air type. The positive electrode current collector had a thickness of 15 µm. The resultant was finally compressed with a roll press.

Next, a negative electrode was produced as described below. In the beginning, the silicon-based active material particles contained in the inventive negative electrode active material were produced by the following procedure. Firstly, a mixed raw material (a material to be vaporized) of metallic silicon and silicon dioxide was placed in a reaction furnace and evaporated under a vacuum atmosphere of 10 Pa to deposit the evaporated material on an adsorption plate. The deposit was sufficiently cooled and then taken out to pulverize the deposit with a ball mill. After adjusting the particle size of the obtained powder, the surface of the silicon oxide particle was coated with a carbon coating by thermal CVD. In this manner, silicon-based active material particles were produced.

The silicon-based active material particles had the silicon compound shown by SiOₓ where x = 0.9. The silicon compound had a median diameter D₅₀ of 4 µm. The amount of the carbon coating was 5% by mass with respect to the total amount of the silicon compound and the carbon coating.

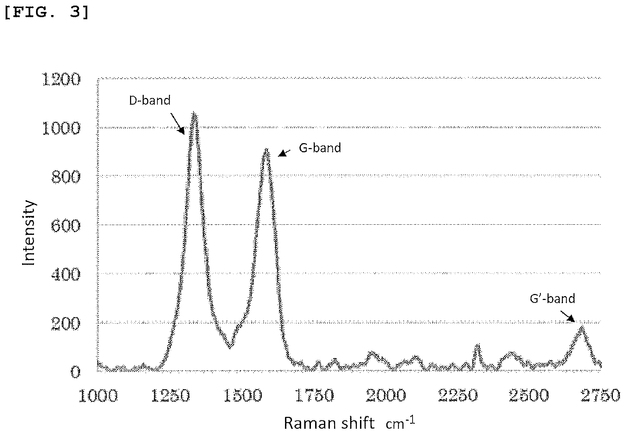

Incidentally, the carbon coating on the surface of the silicon-based active material had the following properties. As shown in FIG. 3, the carbon coating exhibited a G'-band peak at a Raman shift in a range of 2600 cm⁻¹ to 2760 cm⁻¹, a G-band peak at a Raman shift in a range of 1500 cm⁻¹ to 1660 cm⁻¹, and a D-band peak at a Raman shift in a range of 1300 cm⁻¹ to 1460 cm⁻¹ in a Raman spectrum. Each of these peak had an intensity I_{G'}, I_{G}, and I_{D}, which were I_{G'} = 179, I_{G} = 907, and I_{D} = 1088 (each of them was arbitrary value), respectively. Accordingly, I_{G'}/I_{G} = 0.20 and I_{D}/I_{G} = 1.2.

The carbon coating exhibited a fragment of a C_{y}H_{z}-based compound in TOF-SIMS. In the negative ion mass spectrum obtained by TOF-SIMS, a peak attributable to C₃H₅ and a peak attributable to C₄H₉ were detected. The ratio of B/A was 0.93 where A and B are intensities of the peak attributable to C₃H₅ and the peak attributable to C₄H₉, respectively.

Then, the silicon-based active material particles, carbon-based conductive additive-1 (flaky graphite), carbon-based conductive additive-2 (acetylene black), and a precursor of negative electrode binder (polyamic acid) were mixed at a dry-weight ratio of 80-83:10:2:5-8. The mixture was diluted with NMP to form paste slurry of a negative electrode mixture. The NMP was used as a solvent of polyamic acid. The negative electrode mixture slurry was then applied to both faces of a negative electrode current collector with a coating apparatus and dried. The negative electrode current collector used was an electrolytic copper foil (the thickness = 15 µm). This was finally baked at 400°C for 1 hour under a vacuum atmosphere. In this manner, a negative electrode binder (polyimide) was formed.

Next, an electrolyte was prepared by dissolving an electrolyte salt (lithium hexafluorophosphate, LiPF₆) to a solvent in which 4-fluoro-1,3-dioxolan-2-one (FEC), ethylene carbonate (EC), and dimethyl carbonate (DMC) were previously mixed. In this case, the composition of the solvents was FEC:EC:DMC = 10:20:70 in a volume ratio, and the content of the electrolyte salt was 1.2 mol/kg with respect to the solvent.

The secondary battery was assembled by the following procedure. An aluminum lead was first ultrasonic-welded to one end of the positive electrode current collector. A nickel lead was welded to the negative electrode current collector. The positive electrode, a separator, the negative electrode, a separator were then stacked in this order and wound in a longitudinal direction to obtain a wound electrode body. The end of the wound part was fixed by a PET protecting tape. The separators were a 12 µm laminate film mainly composed of a porous polyethylene film interposed between porous polypropylene films. The electrode body was interposed between outer parts and the outer circumferences except one side were heat-sealed to house the electrode body therein. The outer parts were an aluminum laminate film composed of a nylon film, aluminum foil, and a polypropylene film stacked. The prepared electrolyte was poured from an open side to perform the impregnation of the electrolyte under a vacuum. The open side was stuck by heat sealing.

The cycle performance and the first charge and discharge performance were investigated on the laminate film lithium-ion secondary battery produced in the foregoing manner.

The cycle performance was investigated in the following manner: First, two cycles of charging and discharging were performed at 25°C to stabilize the battery and the discharge capacity in the second cycle was measured. Next, the cycle of charging and discharging was repeated until the total number of cycles reached 100 cycles and the discharge capacity was measured every cycle. Finally, a capacity retention rate (hereinafter, also referred to as a retention rate simply) was calculated by dividing the discharge capacity in the 100-th cycle by the discharge capacity in the second cycle and multiply the resultant by 100 to express in %. The cycle conditions were as follows: The secondary batteries were charged with a constant current density of 2.5 mA/cm² until the voltage reached 4.2 V. After this voltage reached 4.2 V, the charging was continued while the current density became 0.25 mA/cm² at a constant voltage of 4.2 V. The batteries were then discharged with a constant current density of 2.5 mA/cm² until the voltage reached 2.5 V.

To investigate the first charge and discharge performance, a first efficiency (hereinafter, also referred to as an initial efficiency) was calculated. The first efficiency was calculated from the expression shown by First Efficiency (%) = (First Discharge Capacity/First Charge Capacity) × 100. The atmosphere temperate was the same as the cycle performance was investigated. The charging and discharging conditions were 0.2 times the conditions of the investigation of the cycle performance. That is, the secondary batteries were charged with a constant current density of 0.5 mA/cm² until the voltage reached 4.2 V. After this voltage reached 4.2 V, the charging was continued while the current density became 0.05 mA/cm² at a constant voltage of 4.2 V. The batteries were then discharged with a constant current density of 0.5 mA/cm² until the voltage reached 2.5 V.

### (Examples 1-2 to 1-6 and Comparative Examples 1-1 to 1-3)

A lithium-ion secondary battery was produced as in Example 1-1 basically except that the I_{G'}/I_{G} was changed as shown in Table 1. The I_{G'}/I_{G} was changed by altering the type of gas, the gas residence time, the temperature, and the pressure in the thermal CVD to adjust the values of I_{G'} and I_{G}.

The cycle performance and first charge and discharge performance were investigated on the produced lithium-ion secondary batteries as in Example 1-1 to obtain results shown in Table 1.

**[Table 1]**

| SiOx (x = 0.9), D₅₀ = 4 µm, Carbon coating 5% by mass, polyimide, Si(111) crystallite = 4.6 nm, FEC:EC:DMC = 1:2:7 LiPF₆ 1.2 mol/kg, positive electrode: LiCoO₂ | | | | | |
|---|---|---|---|---|---|
| Table 1 | I_{G'} | I_{G} | I_{G'}/I_{G} | Retention rate (%) | Initial efficiency (%) |
| Comparative Example 1-1 | 0 | 1021 | 0 | 73 | 66 |
| Example | 179 | 907 | 0.20 | 82.0 | 72 |
| Example 1-2 | 126 | 1709 | 0.07 | 82.3 | 72.3 |
| Example 1-3 | 246 | 982 | 0.25 | 82.1 | 72 |
| Example | 601 | 1582 | 0.38 | 82.0 | 72.1 |
| Example 1-5 | 755 | 1324 | 0.57 | 81.9 | 72 |
| Example 1-6 | 823 | 1372 | 0.60 | 81.4 | 71.6 |
| Comparative Example 1-2 | 841 | 1335 | 0.63 | 79.0 | 69.2 |
| Comparative Example 1-3 | 875 | 1122 | 0.78 | 75 | 69 |

As can be seen from Table 1, lithium-ion secondary batteries with excellent retention rates and initial efficiency were obtained when the carbon coating gave a Raman spectrum that satisfied 0 < I_{G'}/I_{G} ≤ 0.6 as in Examples 1-1 to 1-6. On the other hand, when a G'-peak was not detected, that is, the carbon coating did not contain an overlapping structure of graphene as in Comparative Example 1, the negative electrode active material resulted to increase the resistivity value and to lower the initial efficiency and the capacity retention rate. When the I_{G'}/I_{G} is larger than 0.6 as in Comparative examples 1-2 and 1-3, Li occlusion was occurred on the carbon coating at charging and discharging to lower the retention rate and initial efficiency.

### (Examples 2-1 to 2-6 and Comparative Examples 2-1 and 2-2)

A lithium-ion secondary battery was produced as in Example 1-1 basically except that the oxygen content in the bulk of the silicon compound was adjusted, that is, "x" value in the general formula SiOₓ was changed as shown in Table 2. The oxygen content in the silicon compound to be deposited was adjusted by changing the ratio of metallic silicon and silicon dioxide in the raw material to be vaporized as well as the temperature in the furnace.

The cycle performance and first charge and discharge performance were investigated on the produced lithium-ion secondary batteries as in Example 1-1 to obtain results shown in Table 2.

**[Table 2]**

| SiOx D₅₀ = 4 µm, Carbon coating amount 5% by mass, polyimide, Si(111) crystallite = 4.6 nm, I_{G'}/I_{G} = 0.20, | | | |
|---|---|---|---|
| FEC:EC:DMC = 1:2:7 LiPF₆ 1.2 mol/kg, positive electrode: LiCoO₂ | | | |
| Table 2 | x | Retention rate (%) | Initial efficiency (%) |
| Example 1-1 | 0.9 | 82 | 72 |
| Comparative Example 2-1 | 0.3 | 78 | 74 |
| Example 2-1 | 0.5 | 80 | 73 |
| Example 2-2 | 0.7 | 80 | 73 |
| Example 2-3 | 0.9 | 81 | 72 |
| Example 2-4 | 1.1 | 81 | 71 |
| Example 2-5 | 1.3 | 81 | 70 |
| Example 2-6 | 1.6 | 80 | 70 |
| Comparative Example 2-2 | 1.8 | 75 | 68 |

The retention rate and the initial efficiency were favorable when "x" value satisfied 0.5 ≤ x ≤ 1.6 as in Example 1-1 and Example 2-1 to 2-6. On the other hand, when oxygen was in sufficient in the silicon compound, that is, when x < 0.5 as in Comparative Example 2-1, the capacity retention rate was markedly worsened although the initial efficiency was improved. When the oxygen content is high, that is, when x > 1.6 as in Comparative Example 2-2, the negative electrode active material lowered in electric conductivity, and the retention rate and the initial efficiency were lowered. The following Examples and Comparative Examples employed the negative electrode active material particles in which "x" in SiOₓ was 0.9.

### (Examples 3-1 to 3-3)

A lithium-ion secondary battery was produced as in Example 1-1 basically except for changing the ratio B/A of the peak intensity A attributable to C₃H₅ and the peak intensity B attributable to C₄H₉ in a negative ion mass spectrum obtained by TOF-SIMS as shown in Table 3. The ratio B/A was adjusted by heat treatment of the silicon-based active material particles after the thermal CVD.

The cycle performance and first charge and discharge performance were investigated on the produced lithium-ion secondary batteries as in Example 1-1 to obtain results shown in Table 3.

**[Table 3]**

| SiOx (x = 0.9), D₅₀ = 4 µm, Carbon coating amount 5% by mass, polyimide, Si(111) crystallite = 4.6 nm, FEC:EC:DMC = 1:2:7 LiPF₆ 1.2 mol/kg, positive electrode: LiCoO₂ | | | | | | |
|---|---|---|---|---|---|---|
| Table 3 | I_{G'} | I_{G} | I_{G'}/I_{G} | B/A | Retention rate (%) | Initial efficiency (%) |
| Example 1-1 | 179 | 907 | 0.20 | 0.93 | 82.0 | 72.0 |
| Example 1-2 | 126 | 1709 | 0.07 | 0.74 | 82.3 | 72.3 |
| Example 3-1 | 84 | 1051 | 0.08 | 1.63 | 82.3 | 71.8 |
| Example 3-2 | 231 | 1928 | 0.12 | 1.19 | 82.2 | 72.1 |
| Example 3-3 | 79 | 1324 | 0.06 | 0.52 | 82.4 | 72.5 |

When the relation of 0.5 ≤ B/A ≤ 1.2 was satisfied, the initial efficiency was improved as in Examples 1-1, 1-2, 3-1, 3-2, and 3-3. This is probably due to prevention of side reaction of Li on the surface of the carbon coating.

### (Examples 4-1 to 4-3)

A lithium-ion secondary battery was produced as in Example 1-1 basically except that the I_{D}/I_{G} was changed as shown in Table 4. The intensity ratio I_{D}/I_{G} was adjusted by introducing a minute amount of oxygen into a furnace at high temperature after finishing the thermal CVD to selectively oxidize the G-band component in the carbon coating. The alteration of I_{D}/I_{G} made the negative electrode active material particles change the volume resistivity when compressed to 1.5 g/cm³ as shown in Table 4.

The cycle performance and first charge and discharge performance were investigated on the produced lithium-ion secondary batteries as in Example 1-1 to obtain results shown in Table 4.

**[Table 4]**

| SiOx (x = 0.9), D₅₀ = 4 µm, Carbon coating amount 5% by mass, polyimide, Si(111) crystallite = 4.6 nm, FEC:EC:DMC = 1:2:7 LiPF₆ 1.2 mol/kg, positive electrode: LiCoO₂ | | | | | | | | | |
|---|---|---|---|---|---|---|---|---|---|
| Table 4 | I_{G'} | I_{G} | I_{D} | I_{G'}/I_{G} | B/A | I_{D}/I_{G} | Volume resistivity (Ω·cm) | Retention rate (%) | Initial efficiency (%) |
| Example 1-1 | 179 | 907 | 1088 | 0.20 | 0.93 | 1.2 | 0.1 | 82.0 | 72.0 |
| Example 1-2 | 126 | 1709 | 1941 | 0.07 | 0.74 | 1.1 | 0.3 | 82.3 | 72.3 |
| Example 4-1 | 122 | 1522 | 2283 | 0.08 | 0.69 | 1.5 | 9.7 | 82.1 | 72.1 |
| Example 4-2 | 161 | 1344 | 2419 | 0.12 | 0.59 | 1.8 | 42.3 | 81.9 | 71.9 |
| Example 4-3 | 61 | 1021 | 2042 | 0.06 | 0.49 | 2.0 | 97.6 | 81.9 | 71.7 |

When the range of I_{D}/I_{G} was 1.5 or less, the retention rate and the initial efficiency were favorable because the electron conductivity became good and the volume resistivity was not excessively high.

### (Examples 5-1 to 5-4)

A lithium-ion secondary battery was produced as in Example 1-1 basically except for changing the mass ratio of the carbon coating with respect to a total mass of the silicon compound and the carbon coating as shown in Table 5 by changing the carbon coating amount on the surface of the silicon-based active material. The carbon coating amount is adjustable by changing the treatment time of the thermal CVD.

The cycle performance and first charge and discharge performance were investigated on the produced lithium-ion secondary batteries as in Example 1-1 to obtain results shown in Table 5.

**[Table 5]**

| SiOx (x = 0.9), D₅₀ = 4 µm, polyimide, Si(111) crystallite = 4.6 nm, FEC:EC:DMC = 1:2:7 LiPF₆ 1.2 mol/kg, positive electrode: LiCoO₂ | | | | | | | | | | |
|---|---|---|---|---|---|---|---|---|---|---|
| Table 5 | I_{G'} | I_{G} | I_{D} | I_{G'} /I_{G} | B/A | I_{D}/I_{G} | Volume resistivity (Ω·cm) | Carbon coating amount (mass%) | Retention rate (%) | Initial efficiency (%) |
| Example 1-1 | 179 | 907 | 1088 | 0.20 | 0.93 | 1.2 | 0.1 | 5.0 | 82.0 | 72.0 |
| Example 1-2 | 126 | 1709 | 1941 | 0.07 | 0.74 | 1.1 | 0.3 | 5.0 | 82.3 | 72.3 |
| Example 5-1 | 48 | 952 | 1142 | 0.05 | 1.12 | 1.2 | 0.1 | 0.5 | 81.9 | 71.2 |
| Example 5-2 | 265 | 1154 | 1154 | 0.23 | 0.81 | 1.0 | 0.08 | 10.0 | 82.3 | 72.4 |
| Example 5-3 | 635 | 1672 | 1338 | 0.38 | 0.75 | 0.8 | 0.05 | 15.0 | 82.5 | 72.6 |
| Example 5-4 | 569 | 1324 | 927 | 0.43 | 0.62 | 0.7 | 0.03 | 20.0 | 82.7 | 73.1 |

The buttery performances could be improved by increasing the carbon coating amount. On the other hand, in consideration of the balance of the battery capacity and the battery performances in designing a battery, the mass ratio of the carbon coating is preferably 0.5% by mass or more and 15% by mass or less to secure the battery capacity sufficiently. The I_{D}/I_{G} also changes as the carbon coating amount changes. The battery performances were particularly improved when 0 < I_{D}/I_{G} ≤ 0.8 as shown in Table 5.

### (Examples 6-1 to 6-5)

A lithium-ion secondary battery was produced as in Example 1-1 basically except for changing the crystallinity of the silicon compound as shown in Table 6. The crystallinity is adjustable by the heat treatment under non-atmospheric ambience. In Example 6-1, a peak attributable to Si(111) was not obtained, and the silicon compound was substantially amorphous.

The cycle performance and first charge and discharge performance were investigated on the produced lithium-ion secondary batteries as in Example 1-1 to obtain results shown in Table 6.

**[Table 6]**

| SiOx (x = 0.9), D₅₀ = 4 µm, Carbon coating amount 5% by mass, polyimide, FEC:EC:DMC = 1:2:7 LiPF₆ 1.2 mol/kg, positive electrode: LiCoO₂ | | | | | | | | | |
|---|---|---|---|---|---|---|---|---|---|
| Table 6 | I_{G'} | I_{G} | I_{G'} / I_{G} | B/A | Volume resistivity (Ω·cm) | Half width (°) | Crystallite size (nm) | Retention rate (%) | Initial efficiency (%) |
| Example 1-1 | 179 | 907 | 0.20 | 0.93 | 0.1 | 1.85 | 4.6 | 82.0 | 72.0 |
| Example 1-2 | 126 | 1709 | 0.07 | 0.74 | 0.3 | 1.85 | 4.6 | 82.3 | 72.3 |
| Example 6-1 | 106 | 1322 | 0.08 | 1.07 | 0.6 | 15.23 | amorphous | 84.8 | 72.3 |
| Example 6-2 | 92 | 1145 | 0.08 | 1.02 | 0.6 | 2.71 | 3.1 | 83.1 | 72.1 |
| Example 6-3 | 110 | 1369 | 0.08 | 0.70 | 0.3 | 1.27 | 6.2 | 82.1 | 73.5 |
| Example 6-4 | 67 | 952 | 0.07 | 0.62 | 0.2 | 1.21 | 7.4 | 81.8 | 74.3 |
| Example 6-5 | 148 | 1644 | 0.09 | 0.51 | 0.1 | 1.85 | 10.2 | 79.8 | 75.2 |

As in Examples 1-1, 1-2, and 6-1 to 6-4 in Table 6, high retention rate was obtained by using a material with low crystallinity in which the half width (2θ) of a diffraction peak was 1.2° or more with the diffraction peak being attributable to a Si(111) crystal face obtained by X-ray diffraction and a crystallite size attributable to the crystal face was 7.5 nm or less.

### (Examples 7-1 to 7-8)

A secondary battery was produced as in Example 1-1 basically except for using a negative electrode active material in which the silicon-based active material particles and the carbon-based active material particles were blended in a mass ratio of 50:50. The carbon-based active material used herein was natural graphite, and its median diameter X and the median diameter Y of the silicon-based active material particles were changed as in Table 7 in Examples 7-1 to 7-8.

The cycle performance and first charge and discharge performance were investigated on the produced lithium-ion secondary batteries as in Example 1-1 to obtain results shown in Table 7.

**[Table 7]**

| SiOx (x = 0.9), polyimide, I_{G'}/I_{G} = 0.19, B/A = 0.93, I_{D}/I_{G} = 1.2, volume resistivity 0.1 Q·cm, Si(111) crystallite = 4.6 nm, FEC:EC:DMC = 1:2:7 LiPF₆ 1.2 mol/kg, positive electrode: LiCoO₂ | | | | | |
|---|---|---|---|---|---|
| Table 7 | Y (µm) | X (µm) | X/Y | Retention rate (%) | Initial efficiency (%) |
| Example 7-1 | 4 | 20 | 5.0 | 88.0 | 86.3 |
| Example 7-2 | 4 | 16 | 4.0 | 88.1 | 86.1 |
| Example 7-3 | 4 | 12 | 3.0 | 88.0 | 85.8 |
| Example 7-4 | 4 | 8 | 2.0 | 87.6 | 84.2 |
| Example 7-5 | 4 | 4 | 1.0 | 87.0 | 83.6 |
| Example 7-6 | 4 | 2 | 0.5 | 83.2 | 82.9 |
| Example 7-7 | 8 | 4 | 0.5 | 81.5 | 85.3 |
| Example 7-8 | 8 | 16 | 2.0 | 85.6 | 86.5 |

In the negative electrode active material, the carbon-based active material desirably has a size equal to or larger than that of the silicon compound. Particularly when the median diameter X of the carbon-based active material is larger than the median diameter Y of the silicon compound, which expands and shrinks, that is, the relation of X/Y ≥ 1 is satisfied, the negative electrode active material layer can be prevented from breaking.

It is to be noted that the present invention is not limited to the foregoing embodiment. The embodiment is just an exemplification, and any examples that have substantially the same feature and demonstrate the same functions and effects as those in the technical concept described in claims of the present invention are included in the technical scope of the present invention.

## Claims

1. A negative electrode active material for a non-aqueous electrolyte secondary battery, comprising:
negative electrode active material particles that contain a silicon compound (SiOₓ: 0.5 ≤ x ≤ 1.6) having a carbon coating on a surface,
wherein the carbon coating exhibits a G'-band peak at a Raman shift in a range of 2600 cm⁻¹ to 2760 cm⁻¹ and a G-band peak at a Raman shift in a range of 1500 cm⁻¹ to 1660 cm⁻¹ in a Raman spectrum obtained by Raman spectrometry, and
the G'-band peak and the G-band peak satisfy 0 < I_{G'}/I_{G} ≤ 0.6 where I_{G'} and I_{G} are intensities of the G'-band peak and the G-band peak, respectively.

2. The negative electrode active material for a non-aqueous electrolyte secondary battery according to claim 1, wherein the carbon coating exhibits a fragment of a C_{y}H_{z}-based compound in time of flight secondary ion mass spectroscopy.

3. The negative electrode active material for a non-aqueous electrolyte secondary battery according to claim 2, wherein the carbon coating exhibits a peak attributable to C₃H₅ and a peak attributable to C₄H₉ in the time of flight secondary ion mass spectroscopy spectrum and satisfies a relationship of 0.5 ≤ B/A ≤ 1.2 where A and B are intensities of the peak attributable to C₃H₅ and the peak attributable to C₄H₉, respectively.

4. The negative electrode active material for a non-aqueous electrolyte secondary battery according to any one of claims 1 to 3, wherein the carbon coating further exhibits a D-band peak at a Raman shift in a range of 1300 cm⁻¹ to 1460 cm⁻¹ in the Raman spectrum obtained by Raman spectrometry and satisfies 0.5 < I_{D}/I_{G} ≤ 1.5 where I_{D} and I_{G} are intensities of the D-band peak and the G-band peak, respectively.

5. The negative electrode active material for a non-aqueous electrolyte secondary battery according to any one of claims 1 to 4, wherein a mass ratio of the carbon coating is 0.5% by mass or more and 15% by mass or less with respect to a total mass of the silicon compound and the carbon coating.

6. The negative electrode active material for a non-aqueous electrolyte secondary battery according to any one of claims 1 to 5, wherein the silicon compound exhibits a diffraction peak having a half width (2θ) of 1.2° or more, the diffraction peak being attributable to a Si(111) crystal face and obtained by X-ray diffraction, and a crystallite size attributable to the crystal face is 7.5 nm or less.

7. The negative electrode active material for a non-aqueous electrolyte secondary battery according to any one of claims 1 to 6, wherein the negative electrode active material particles have volume resistivity of 0.10 Ω·cm or more and 100 Ω·cm or less when the negative electrode active material particles are compressed to 1.5 g/cm³.

8. A negative electrode for a non-aqueous electrolyte secondary battery comprising a negative electrode active material for a non-aqueous electrolyte secondary battery according to any one of claims 1 to 7.

9. The negative electrode for a non-aqueous electrolyte secondary battery according to claim 8, further comprising a carbon-based active material, wherein the silicon compound and the carbon-based active material satisfy a relationship of X/Y ≥ 1 where Y and X are median diameters of the silicon compound and the carbon-based active material, respectively.

10. A non-aqueous electrolyte secondary battery comprising a negative electrode for a non-aqueous electrolyte secondary battery according to claim 8 or 9.

11. A method of producing a negative electrode material for a non-aqueous electrolyte secondary battery containing negative electrode active material particles, comprising the steps of:
producing silicon oxide particles shown by the general formula of SiOₓ (0.5 ≤ x ≤ 1.6);
coating each surface of the silicon oxide particles with a carbon coating; and
choosing selected silicon oxide particles coated with the carbon coating from among the silicon oxide particles coated with the carbon coating such that the carbon coating of the selected silicon oxide particles exhibits a G'-band peak at a Raman shift in a range of 2600 cm⁻¹ to 2760 cm⁻¹ and a G-band peak at a Raman shift in a range of 1500 cm⁻¹ to 1660 cm⁻¹ in a Raman spectrum obtained by Raman spectrometry and satisfies 0 < I_{G'}/I_{G} ≤ 0.6 where I_{G'} and I_{G} are intensities of the G'-band peak and the G-band peak, respectively;
wherein the negative electrode material for a non-aqueous electrolyte secondary battery is produced by using the selected silicon oxide particles coated with the carbon coating as the negative electrode active material particles.
